# EUROPÄISCHE PATENTANMELDUNG

(11) **EP 1 093 207 A2**
(43) Veröffentlichungstag der Anmeldung: **18.04.2001**
(21) Anmeldenummer: 00121421.2
(22) Anmeldetag: 29.09.2000
(51) Int. Cl.: H02K 1/16, H02K 3/28, H02K 21/14

(54) **Elektromotor**

(30) Priorität: 11.10.1999 AT 171999
(71) Anmelder: Innova Patent GmbH, 6960 Wolfurt (AT)
(72) Erfinder: Albrich, Reinhard, 6850 Dornbirn (AT)
(74) Vertreter: Torggler, Paul, Dr.

(57) **Zusammenfassung**

Elektromotor mit einem ortsfesten ringförmigen Stator mit bewickelten Statorpolen und mit einem drehbar gelagerten Rotor, der ringförmig verteilte Permanentmagnete oder Elektromagnete wechselnder Polung aufweist, wobei der Stator (1) aus mehreren gesonderten Statorsegmenten (1a - 1f) mit eigenen, vorzugsweise dreiphasigen Stromanschlüssen (4a - 4f) aufgebaut ist, wobei jedes Statorsegment (1a - 1f) über die jeweiligen Stromanschlüsse (4a - 4f) von einem eigenen Frequenzumrichter (5a - 5f) gespeist wird.

## Beschreibung

Die Erfindung betrifft einen Elektromotor mit einem ortsfesten ringförmigen Stator mit bewickelten Statorpolen und mit einem drehbar gelagerten Rotor, der ringförmig verteilte Permanentmagnete oder Elektromagnete wechselnder Polung aufweist. Weiters betrifft die Erfindung einen Seilantrieb mit einer angetriebenen Seilumlenkscheibe.

Bei Seilbahnantrieben, insbesondere bei Aufstiegshilfen (Seilbahnanlagen mit Personentransport) sind bisher bereits Elektromotoren zum Einsatz gekommen. Bisher mußte der Ausfall des Elektromotors auf einen beispielsweise dieselbetriebenen Notantrieb umgestellt werden, um die Seilbahnanlage leerfahren zu können. Während dieser Umstellungsarbeiten, die in der Regel viel Zeit in Anspruch nehmen, mußten die Fahrgäste in den Kabinen oder auf den Sesseln warten, was im Winter zur Unterkühlung der Fahrgäste führen kann.

Eine Aufgabe der Erfindung besteht darin, einen insbesondere für Seilbahnantriebe geeigneten Elektromotor zu schaffen, der sehr betriebssicher ist und damit eine hohe Verfügbarkeit aufweist.

Erfindungsgemäß wird dies bei einem Elektromotor der eingangs erwähnten Gattung dadurch erreicht, daß der Stator aus mehreren gesonderten Statorsegmenten mit eigenen, vorzugsweise dreiphasigen Stromanschlüssen aufgebaut ist, wobei jedes Statorsegment über die jeweiligen Stromanschlüsse von einem eigenen Frequenzumrichter gespeist wird.

Dabei ist es von Vorteil, wenn jedes Statorsegment mehrpolig ausgeführt ist, wobei die Wicklungsleitungen in Serie oder parallel über mindestens zwei Pole geführt sind. Man kann damit einen Aufbau erreichen, bei dem jedes Statorsegment den Stator einer eigenen, vorzugsweise permanent erregten Synchronmaschine bildet, die prinzipiell für sich selbst lauffähig ist.

Damit kann man erreichen, daß bei Ausfall eines oder mehrerer Statorsegmente (beispielsweise durch Wicklungskurzschluß oder Ausfällen im zugehörigen Frequenzumrichter) der Elektromotor insgesamt ohne Zusatzmaßnahmen weiterlaufen kann. Es ist lediglich die Leistung bzw. der Drehmoment des gesamten Elektromotors auf die dann im Betrieb befindlichen Statorsegmente reduziert. In der Praxis wird man zwischen drei und zehn, vorzugsweise zwischen vier und sechs solcher Statorsegmente vorsehen.

Über ein Schütz in den Zuleitungen zwischen Frequenzumrichter und Statorsegment kann der jeweilige Frequenzumrichter eines ausgefallenen Statorsegments vor schädlichen Rückspeisungen geschützt werden. Eine Überwachungselektronik, die beispielsweise den Strom zu den einzelnen Statorsegmenten überwacht, kann den Ausfall von Statorsegmenten feststellen und dem Betriebspersonal beispielsweise auf einer Anzeigetafel anzeigen.

Der erfindungsgemäße Aufbau des Stators aus mehreren Statorsegmenten mit eigenen Stromanschlüssen erlaubt es bei einem Elektromotor mit einem ortsfesten ringförmigen Stator mit bewickelten Statorpolen und einem drehbar gelagerten Rotor, diesen auch bei größeren Dimensionen (beispielsweise Durchmesser von zwei oder mehr Metern) und auch an geographisch schwierigen Routen aufzubauen, wenn die Statorsegmente jeweils als gesonderte, modulare Baueinheiten ausgeführt sind, die unabhängig voneinander an einem Statorträger lösbar befestigt sind. Diese Baueinheiten lassen sich dann leicht, beispielsweise mittels eines Hubschraubers, zur Bergstation einer Seilbahnanlage transportieren und an Ort und Stelle zu einem Stator des Elektromotors zusammenbauen. Auch bei Ausfall einer solchen Statorsegment-Baueinheit kann diese leicht und einfach ausgetauscht werden. Die Lagerhaltung ist damit auch reduziert.

Wie bereits erwähnt, eignet sich der erfindungsgemäße Elektromotor insbesondere für Seilbahnantriebe, wobei es möglich ist, daß die Seilumlenkscheibe selbst oder ein Teil, der drehfest damit verbunden ist, als Rotor des Elektromotors ausgebildet ist. Es ist aber auch denkbar, den Elektromotor in an sich bekannter Weise über ein Getriebe mit der Seilumlenkscheibe zu verbinden.

Weitere Vorteile und Einzelheiten der Erfindung werden anhand der Figurenbeschreibung näher erläutert.
Die Fig. 1 zeigt den schematischen Aufbau eines Ausführungsbeispiels eines erfindungsgemäßen Elektromotors,
die Fig. 2 zeigt ein Wickelschema einer 16-poligen permanent erregten Synchronmaschine nach dem Stand der Technik,
die Fig. 3 zeigt ein geändertes Wickelschema für eine permanent erregte Synchronmaschine gemäß der Erfindung, bei der der Stator in vier Statorsegmente unterteilt ist, die jeweils eigene Anschlüsse aufweisen,
die Fig. 4 zeigt in einem vertikalen Längsschnitt ein Ausführungsbeispiel des erfindungsgemäßen Elektromotors zum Antrieb einer Seilscheibe.

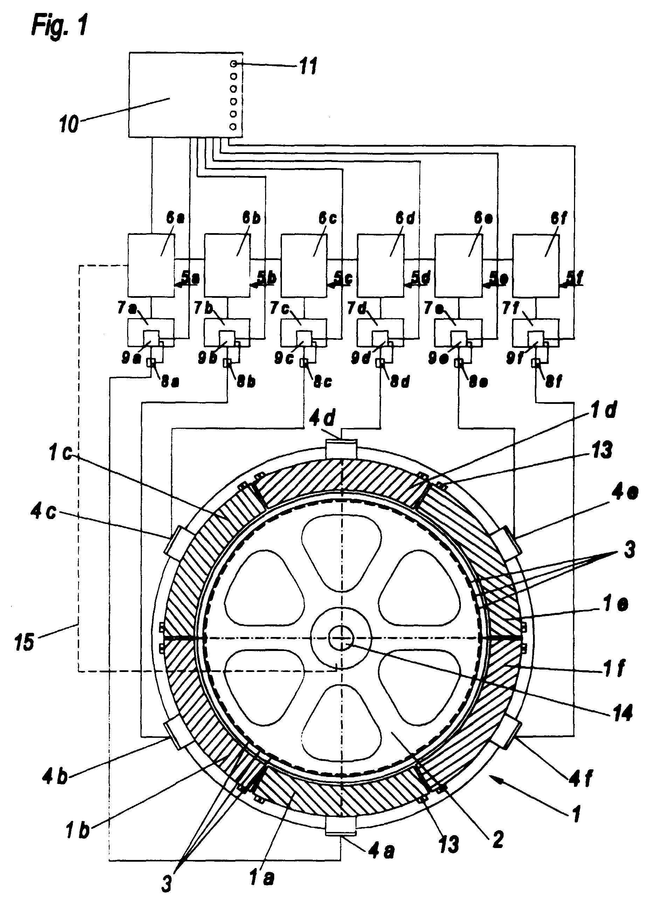

Der in Fig. 1 dargestellte Elektromotor weist einen insgesamt mit 1 bezeichneten ortsfesten ringförmigen Stator mit bewickelten Statorpolen zur Erzeugung eines Drehfelds auf.

Darüberhinaus ist ein drehbar gelagerter Rotor 2 vorgesehen, der mit Permanentmagneten wechselnder Polung, die über seinen Umfang ringförmig verteilt sind, versehen ist. Diese Permanentmagnete sind mit der Bezugsziffer 3 bezeichnet und können beispielsweise aus Ferritwerkstoff, Samarium-Kobalt-Werkstoff oder Eisen-Neodym-Werkstoff hergestellt sein.

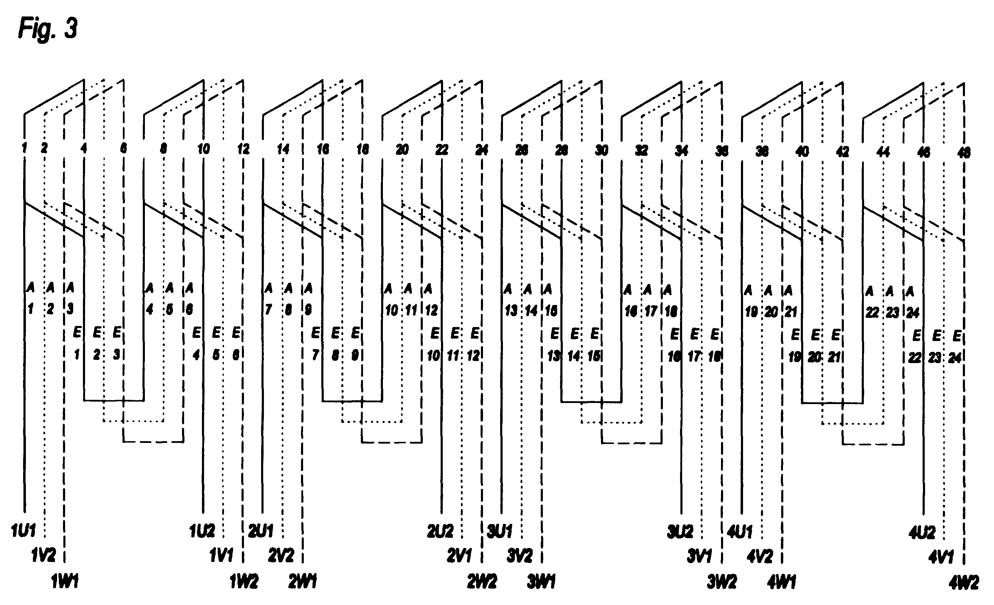

Erfindungsgemäß besteht nun der Stator 1 aus mehreren gesonderten Statorsegmenten 1a, 1b, 1c, 1d, 1e und 1f, die jeweils eigene Stromanschlüsse 4a bis 4f aufweisen. Die Stromanschlüsse bzw. die Leitungen sind hier nur schematisch dargestellt. Bei einer Speisung mit Drehstrom wird man pro Statorsegment 1a bis 1f jeweils eine dreiphasige Zuleitung und eine dreiphasige Ableitung vorsehen, wie sie beispielsweise aus dem Wickelschema der Fig. 3 ersichtlich ist. Die Ableitung kann intern zu einem Sternpunkt zusammengefaßt sein (wahlweise).

Im Aufbau kann jedes Statorsegment im wesentlichen einer eigenen, vorzugsweise permanent erregten Synchronmaschine entsprechen, wobei jedes Statorsegment mehrpolig ausgeführt ist und die Wicklungsleitungen in Serie oder parallel über mindestens zwei Pole geführt sind, um insgesamt das gewünschte Drehfeld zu erzeugen.

Wie aus der Fig. 1 ersichtlich, ist jedes Statorsegment 1a bis 1f über die jeweiligen Stromanschlüsse 4a bis 4f von einem eigenen Frequenzumrichter 5a bis 5f gespeist, wobei jeder Frequenzumrichter in an sich bekannter Weise einen Steuerteil 6a bis 6f und einen Leistungsteil 7a bis 7f aufweist. Die Steuerteile 6a bis 6f sind im Sinne einer Master-Slave-Funktion zusammengeschaltet, wobei der Steuerteil 6a die Masterfunktion übernimmt. Bei Ausfall von 6a kann jedes der Steuerteile 6b bis 6f die Masterfunktion neu übernehmen, sodaß die Redundanz optimal gegeben ist. Die Leistungsteile 7a bis 7f sind untereinander unabhängig und jeweils nur vom eigenen Steuerteil 6a bis 6f angesteuert, um den Strom an die einzelnen Statorsegmente 1a bis 1f zu liefern.

Bei Ausfall eines Statorsegmentes 1a bis 1f bzw. des zugehörigen Frequenzumrichters 5a bis 5f bleibt der Elektromotor voll lauffähig, was vor allem beim Einsatz bei Seilbahnanlagen von großer Bedeutung ist. Es wird lediglich der Drehmoment bzw. die Leistungsabgabe entsprechend dem Ausfall des jeweiligen Teiles reduziert.

Um die Frequenzumrichter 5a bis 5f vor störenden Rückspeisungen zu schützen, sind in den Zuleitungen Schütze 8a bis 8f eingebaut, die beispielsweise in Abhängigkeit von einer Stromerfassungseinrichtung 9a bis 9f derart gesteuert sind, daß bei Zusammenbruch des Stroms der jeweilige Schütz sofort öffnet. Diese Stromerfassungseinrichtung 9a bis 9f stellt Teil einer Überwachungselektronik dar, die beispielsweise an der Anzeigetafel eines Hauptsteuergerätes 10 über Anzeigen 11 dem Personal bekanntgeben kann, welches Statorsegment ausgefallen ist.

Über die Hauptsteuereinrichtung 10 werden dem Steuerteil 6a (Master) die gewünschten Motorparameter (wie beispielsweise die Drehzahl) vorgegeben. Der Aufbau der Frequenzumrichter kann im wesentlichen dem Stand der Technik bei permanent erregten Synchronmaschinen entsprechen.

Ebenfalls zum Stand der Technik gehört ein sogenannter Resolver 14 (Drehwinkelgeber), der die Winkelstellung des Rotors 2 erfaßt und über eine Resolverleitung 15 an den Master-Umrichter 6a weitergibt.

Ein weiterer Aspekt der Erfindung besteht darin, daß der erfindungsgemäße Elektromotor nicht nur - wie oben beschrieben - elektrisch in Segmente unterteilt ist, sondern daß die Statorsegmente auch mechanisch als gesonderte modulare Baueinheiten ausgeführt sind, die unabhängig voneinander an einem Statorträger 12 lösbar befestigbar sind, beispielsweise über schematisch dargestellte Schraubverbindungen 13. Damit ist es möglich, den Elektromotor modular vor Ort aufzubauen und im Falle des Ausfalls eines Statorsegmentes dieses rasch und einfach auszutauschen.

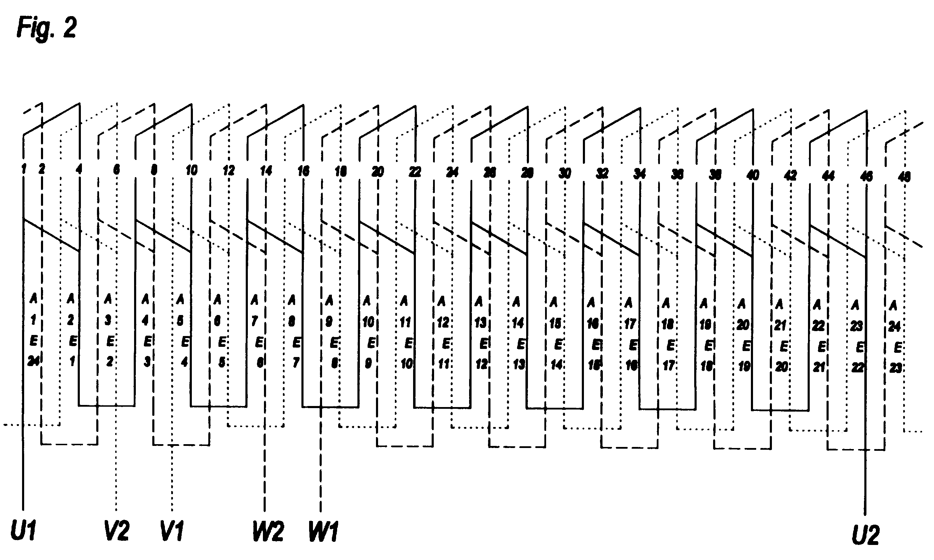

Die Fig. 2 zeigt ein Wickelschema einer 16-poligen permanent erregten Synchronmaschine nach dem Stand der Technik, bei der also der Stator nicht in Segmente unterteilt ist.

Dem gegenüber zeigt die Fig. 3 ein Wickelschema einer 4 x 4-poligen Maschine gemäß der Erfindung, die vier Statorsegmente aufweist. Man sieht, daß nach 4 Polen keine Wickelleitungen weitergehen, sondern diese herausführbar sind. Man kann daher die einzelnen Statorsegmente mit jeweils 4 Polen elektrisch unabhängig beschalten und vorzugsweise - wie oben erwähnt - auch mechanisch modular trennen. Die Wicklungsart gemäß Fig. 3 weist zwar mehrere Kreuzungspunkte auf, erlaubt aber den erfindungsgemäßen segmentierten bzw. modularen Aufbau.

Selbstverständlich sind natürlich auch andere Wicklungsschemata durchaus denkbar und möglich. Auch ist die Erfindung nicht auf dreiphasige Drehstromsysteme beschränkt.

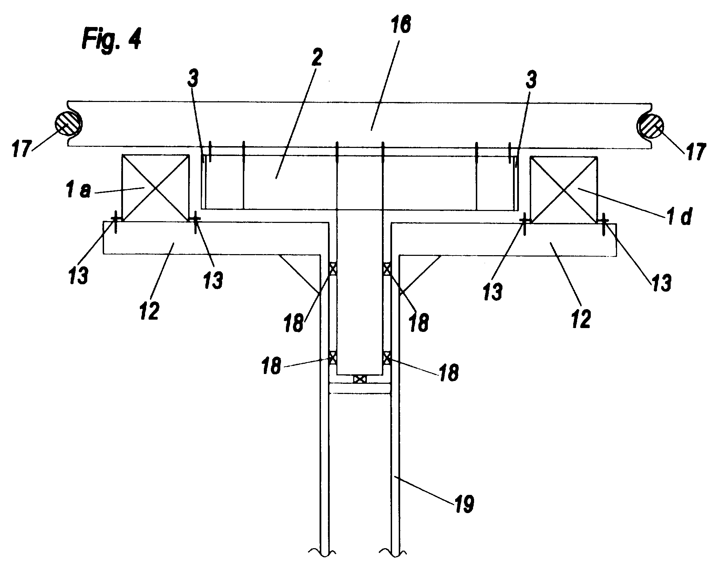

Die Fig. 4 zeigt den Einsatz eines erfindungsgemäßen Elektromotors zum Antrieb einer Seilscheibe 16, in dessen Nut ein Förderseil 17 herumgeführt ist. Die Seilscheibe 16 ist direkt drehfest mit dem Rotor 2 des Elektromotors verbunden, der an seiner Umfangsfläche Permanentmagnete 3 wechselnder Polarität trägt. Grundsätzlich wäre es auch denkbar, hier Elektromagnete anstelle der Permanentmagnete 3 einzusetzen. Der Rotor 2 ist in Lagern 18 drehbar in einer Stütze 19 gelagert. Der Stator ist aus einzelnen Statorsegmenten aufgebaut, beispielsweise sechs, wie in Fig. 1. Diese Statorsegmente, von denen nur zwei, nämlich 1a und 1d, sichtbar sind, sind über Schraubverbindungen 13 mit einem ortsfesten Träger 12 verbunden. Selbstverständlich sind auch konstruktive Lösungen denkbar, bei denen der Stator innen und der Rotor außen liegt. Die Seilscheibe kann vorzugsweise (aber nicht ausschließlich) ein Seil einer Seilbahn oder einer sonstigen Aufstiegshilfe, wie beispielsweise Sessellift oder Schlepplift, antreiben.

## Patentansprüche

1. Elektromotor mit einem ortsfesten ringförmigen Stator mit bewickelten Statorpolen und mit einem drehbar gelagerten Rotor, der ringförmig verteilte Permanentmagnete oder Elektromagnete wechselnder Polung aufweist, dadurch gekennzeichnet, daß der Stator (1) aus mehreren gesonderten Statorsegmenten (1a - 1f) mit eigenen ― vorzugsweise dreiphasigen ― Stromanschlüssen (4a - 4f) aufgebaut ist, wobei jedes Statorsegment (1a - 1f) mehrpolig und mehrphasig ausgebildet ist und über die jeweiligen Stromanschlüsse (4a - 4f) von einem eigenen Frequenzumrichter (5a - 5f) gespeist wird.

2. Elektromotor nach Anspruch 1, dadurch gekennzeichnet, daß jedes Statorsegment (1a - 1f) mehrpolig ausgeführt ist, wobei die Wicklungsleitungen in Serie oder parallel über mindestens zwei Pole geführt sind.

3. Elektromotor nach Anspruch 1 oder 2, dadurch gekennzeichnet, daß jedes Statorsegment (1a - 1f) den Stator (1) einer eigenen, vorzugsweise permanent erregten Synchronmaschine bildet.

4. Elektromotor nach einem der Ansprüche 1 bis 3, dadurch gekennzeichnet, daß jeder Frequenzumrichter (5a - 5f) in an sich bekannter Weise einen Steuerteil (6a - 6f) und einen Leistungsteil (7a - 7f) aufweist, wobei die Steuerteile in Master-Slave-Funktion geschaltet sind und jeder Steuerteil über seinen eigenen Leitstungsteil das jeweils zugeordnete Statorsegment ansteuert.

5. Elektromotor nach einem der Ansprüche 1 bis 4, dadurch gekennzeichnet, daß in den Zuleitungen zwischen Frequenzumrichter und Statorsegment jeweils ein Schütz (8a - 8f) angeordnet ist.

6. Elektromotor nach einem der Ansprüche 1 bis 5, gekennzeichnet durch eine Überwachungselektronik (9a - 9f, 10, 11) zum Feststellen und Anzeigen des Ausfalls eines der Statorsegmente (1a - 1f).

7. Elektromotor nach einem der Ansprüche 1 bis 6, dadurch gekennzeichnet, daß drei bis zehn, vorzugsweise vier bis sechs, Statorsegmente (1a - 1f) vorgesehen sind.

8. Elektromotor nach einem der Ansprüche 1 bis 7, dadurch gekennzeichnet, daß die Statorsegmente (1a - 1f) derart aneinandergereiht sind, daß sie insgesamt einen im wesentlichen geschlossenen Statorring ergeben.

9. Elektromotor mit einem ortsfesten ringförmigen Stator mit bewickelten Statorpolen und einem drehbar gelagerten Rotor insbesondere nach einem der Ansprüche 1 bis 8, dadurch gekennzeichnet, daß der Stator aus mehreren Statorsegmenten (1a - 1f) mit eigenen Stromanschlüssen (4a - 4f) aufgebaut ist, wobei die Statorsegmente jeweils als gesonderte, modulare Baueinheiten ausgeführt sind, die unabhängig voneinander an einem Statorträger (12) lösbar befestigbar sind.

10. Seilantrieb, insbesondere für eine Seilbahn oder eine Aufstiegshilfe, mit einer Seilumlenkscheibe (16), die von einem Elektromotor nach einem der Ansprüche 1 bis 9 angetrieben ist.

11. Seilantrieb nach Anspruch 10, dadurch gekennzeichnet, daß die Seilumlenkscheibe (16) selbst oder ein damit drehfest verbundener Teil als Rotor (2) des Elektromotors ausgebildet ist.

12. Seilantrieb nach Anspruch 10, dadurch gekennzeichnet, daß der Elektromotor die Seilumlenkscheibe über ein Getriebe antreibt.
